Europäisches Patentamt

European Patent Office

Office européen des brevets

(19)

(11) Publication number: **0 062 828**
**A2**

## (12) EUROPEAN PATENT APPLICATION

(21) Application number: **82102638.2**

(22) Date of filing: **29.03.82**

(51) Int. Cl.³: **G 09 B 29/00**
**G 09 F 7/12**

(30) Priority: **07.04.81 GB 8110913**

(43) Date of publication of application:
**20.10.82 Bulletin 82/42**

(84) Designated Contracting States:
**AT BE CH DE FR GB IT LI LU NL SE**

(71) Applicant: HUNTER, PETER NORMAN ROBERT
Copper Beach Eel Pie Island
Twickenham Middlesex(GB)

(72) Inventor: HUNTER, PETER NORMAN ROBERT
Copper Beach Eel Pie Island
Twickenham Middlesex(GB)

(54) Flow chart symbols for computer programming.

(57) There is described an apparatus for assembling a flow chart for use in computer programming, which comprises a plurality of flat display elements made of plastics material, the shape of each element being substantially that of a flow chart symbol or each element having a flow chart symbol printed thereon and the plastics material having the property of adhering to smooth surfaces, a board having a smooth surface, and means, for example a water based ink pen, for writing eraseably on the board and/or on the display elements. There is also described a method of assembling a flow chart for use in computer programming, which comprises using the apparatus.

EP 0 062 828 A2

THE PRESENT INVENTION relates to flow chart symbols for computer programming. In particular the present invention relates to a method and an apparatus whereby flow charts for use in computer programming can be quickly and easily assembled and rearranged, so as to be easily read and interpreted.

Flow charts for use in computer programming are commonly drawn by hand. This is disadvantageous in that each of the symbols has to be separately drawn, which is time consuming. A further disadvantage is that, if an error is made, or if it is wished to modify an already compiled flow chart, some or all of the flow chart must be erased and redrawn. Moreover, some of the standard flow chart symbols resemble each other closely and must be carefully drawn if they are not to be confused.

It is an object of the present invention to provide an apparatus and a method whereby the above disadvantages may be overcome or at least mitigated.

Accordingly, a first aspect of the present invention provides an apparatus for assembling a flow chart for use in computer programming, which apparatus comprises a plurality of display elements, each display element comprising a representation of a flow chart symbol.

Each flow chart symbol may be a British Standard flow chart symbol as defined in BS 4058. Alternatively, American Standard flow chart symbols, as recommended by the X6 committee to the United States of America Standards Institute, New York City, may be used.

A second aspect of the present invention provides a method of assembling a flow chart for use in computer programming,which method comprises the step of disposing on a display matrix a plurality of display elements, each display element comprising a representation of a flow chart symbol.

For a better understanding of the present invention, and to show how the same may be put into effect, reference will now be made to an exemplary embodiment thereof, wherein the display elements are made of a sheet plastics material, the characteristics of the plastics material, and the surface area to weight ratio of each element, being such that each element can adhere detachably to a smooth surface. The shape of each element may be substantially that of a British Standard flow chart symbol. Alternatively, each element may be rectangular and have a British Standard flow chart symbol printed thereon. These symbols, with their meanings, are shown in BS 4058.

The elements are supplied ready for use adhered to plastics material coated paper, on which they can also be stored when not in use. Each element can either be formed separately, or as part of a perforated, scored or cut sheet from which it can be detached. Different symbols have different colours, at least for the more commonly used symbols and to distinguish between symbols which have similar shapes, or the same shape but different sizes. In addition, a mnemonic, e.g. "Decision" may be printed on each element during manufacture, so that the meaning of the symbol represented can be seen during use.

In use, a flow chart is constructed by pressing the elements onto a plastics coated board. The flow lines between elements, the quantities to be operated on, and additional text or notes, are drawn and/or written on the board and, if desired, on the elements themselves using, for example, a water based ink pen so that they can easily be erased using a damp cloth.

Thus there is provided an apparatus and a method whereby a flow chart can be quickly and easily assembled and rearranged, and easily read and interpreted. The present invention removes the necessity to draw each symbol by hand and enables erasures and corrections to be carried out quickly and easily. The provision of elements in distinctive colours and with mnemonics printed thereon means that the user can read the chart "at a glance", and reduces the likelihood of errors arising because of confusion between symbols, or confusion as to the meaning of a symbol. We envisage that the present invention will be especially useful for teaching purposes.

CLAIMS

1. Apparatus for assembling a flow chart for use in computer programming, which apparatus comprises a plurality of display elements, each display element comprising a representation of a flow chart symbol.

2. Apparatus according to Claim 1, wherein the plurality of display elements is made of a sheet plastics material.

3. Apparatus according to Claim 1 or 2, wherein the plurality of display elements comprises a sheet of material perforated, scored or cut so that each element is detachable therefrom.

4. Apparatus according to any one of Claims 1 to 3, wherein the shape of each display element is substantially that of a flow chart symbol.

5. Apparatus according to any one of Claims 1 to 3, wherein each display element has a flow chart symbol printed thereon.

6. Apparatus according to any one of the preceding claims, wherein the flow chart symbol is a British Standard flow chart symbol as defined in BS 4058.

7. Apparatus according to any one of the preceding claims, wherein all the said representations having substantially the same shape and size also have substantially the same colour.

8. Apparatus according to any one of the preceding claims, wherein representations which differ substantially in shape and size also differ substantially in colour.

9. Apparatus according to any one of the preceding claims, wherein the plurality of display elements is made of a sheet plastics material, the characteristics of which, and the surface area to weight ratio of each element, being such that each element can adhere detachably to a smooth surface.

10. Apparatus according to any one of the preceding claims, which further comprises a display matrix.

11. Apparatus according to Claim 10, wherein the display matrix comprises a member having a smooth surface of substantially larger area than that of any display element.

12. Apparatus according to Claim 10 or 11, which further comprises means for writing eraseably on the display matrix and/or a display element.

13. A method of assembling a flow chart for use in computer programming, which method comprises the step of disposing on a display matrix a plurality of display elements, each display element comprising a representation of a flow chart symbol.